# EUROPÄISCHE PATENTSCHRIFT

(11) **EP 3 619 086 B1**
(45) Veröffentlichungstag und Bekanntmachung des Hinweises auf die Patenterteilung: **11.10.2023**
(21) Anmeldenummer: 18725133.5
(22) Anmeldetag: 04.05.2018
(51) Int. Cl.: B60W 30/18, B60W 30/09, B60W 30/095, G08G 1/16, B60W 50/00, B60W 50/08, B60W 40/09

(54) **VORRICHTUNG UND VERFAHREN ZUM AKTIVIEREN/DEAKTIVIEREN EINES SICHERHEITSSYSTEMS EINES KRAFTFAHRZEUGS BEI EINEM ABBIEGEVORGANG DES KRAFTFAHRZEUGS**
DEVICE AND METHOD FOR ACTIVATING/DEACTIVATING A MOTOR VEHICLE SECURITY SYSTEM DURING A TURNING MANOUEVER OF THE MOTOR VEHICLE
DISPOSITIF ET PROCÉDÉ D'ACTIVATION/DE DÉSACTIVATION D'UN SYSTÈME DE SÉCURITÉ D'UN VÉHICULE AUTOMOBILE LORS D'UNE OPÉRATION DE VIRAGE DU VÉHICULE AUTOMOBILE

(30) Priorität: 04.05.2017 DE 102017207463
(43) Veröffentlichungstag der Anmeldung: 11.03.2020
(73) Patentinhaber: Bayerische Motoren Werke Aktiengesellschaft, 80809 München (DE)
(72) Erfinder: GÖTZ, Alexander, 80939 München (DE); UNGERMANN, Sören, 81737 München (DE)
(86) Internationale Anmeldenummer: PCT/EP2018/061501
(87) Internationale Veröffentlichungsnummer: WO 2018/202851

(56) Entgegenhaltungen:
- EP-A1- 2 293 255
- DE-A1-102012 009 555
- DE-U1-202013 008 112

## Beschreibung

Die vorliegende Erfindung betrifft eine Vorrichtung zum Aktivieren/Deaktivieren eines Sicherheitssystems eines Kraftfahrzeugs bei einem Abbiegevorgang des Kraftfahrzeugs. Des Weiteren betrifft die vorliegende Erfindung ein Kraftfahrzeug, insbesondere einen Personenkraftwagen, mit einer solchen Vorrichtung sowie ein Verfahren zum Aktivieren/Deaktivieren eines Sicherheitssystems eines Kraftfahrzeugs bei einem Abbiegevorgang des Kraftfahrzeugs.

Um die Sicherheit für den Benutzer, bzw. die Insassen, eines Kraftfahrzeugs zu erhöhen, kann in einem Kraftfahrzeug, beispielsweise einem Personenkraftwagen oder einem Lastkraftwagen, ein automatisches Bremsen bei gefährlichen Situationen implementiert werden. Zu solchen Situationen gehört beispielsweise ein (überraschendes) Bremsen eines vorausfahrenden Kraftfahrzeugs, auf das das eigene Kraftfahrzeug auffahren könnte, oder das Abbiegen des eigenen Kraftfahrzeugs, welches dabei in Kollision mit anderen Verkehrsteilnehmern geraten kann. Zu einem solchen Abbiegevorgang gehört auch das Abbiegen an einer Kreuzung über eine Gegenspur, d.h. bei Rechtsverkehr ein Linksabbiegen, bei Linksverkehr ein Rechtsabbiegen.

Um bei solchen Abbiegevorgängen eine Kollision mit dem Gegenverkehr, d.h. einem auf der kreuzenden Fahrspur entgegenkommenden Kraftfahrzeug, zu verhindern, können in Kraftfahrzeugen Abbiegeassistenten eingesetzt werden, die ein automatisches Bremsen des Kraftfahrzeugs bewirken. Hierzu können beispielsweise Systeme, wie Kamerasysteme und/oder Radarsysteme verwendet werden, um zu bestimmen, ob eine Kollisionsgefahr besteht, und das Bremsen des Kraftfahrzeugs bei einer solchen Kollisionsgefahr zu initiieren.

Nach einem erfolgten Eingriff eines Abbiegeassistenten mit einer Aktivierung der Bremse, kann dem Fahrer die Möglichkeit gegeben werden, den Eingriff samt Bremsung mit einer Betätigung des Gaspedals oder einer anderen Steuereinheit des Kraftfahrzeugs abzubrechen und somit darüber zu steuern. Dieser Abbruch des Eingriffs erfolgt erst, nachdem ein Eingriff stattgefunden hat. Auf das durch den Fahrer gewünschte Fahrverhalten wird bei solchen Systemen nicht eingegangen, wodurch die Autonomie des Fahrers eingeschränkt wird.

DE 10 2012 009 555 A1 offenbart ein Verfahren zur Unterstützung eines Fahrers beim Führen eines Fahrzeugs in einem Kreuzungsbereich, wobei in einer Umgebung des Fahrzeugs befindliche Objekte erfasst werden und eine Kreuzungssituation ermittelt wird. In der Umgebung werden in einem fließenden Verkehr von dem Fahrzeug befahrbare freie Flächenbereiche detektiert, wobei eine Wahrscheinlichkeit ermittelt wird, ob das Fahrzeug kollisionsfrei in die freien Flächenbereiche des fließenden Verkehrs führbar ist. Bei Unterschreitung einer vorgegebenen Sollwahrscheinlichkeit wird eine Fahrerwarnung ausgegeben und/oder es wird eine automatische Längs- und/oder Quersteuerung des Fahrzeugs zur Vermeidung einer Kollision durchgeführt.

EP 2 293 255 A1 offenbart ein Verfahren zur Steuerung eines Kraftfahrzeugs, insbesondere zum Zu- und Abschalten und/oder Einstellen von Fahrfunktionen und/oder von Leistungsmerkmalen, wobei wenigstens ein fahrerspezifischer, das Fahrkönnen des Fahrers beschreibender Evaluationswert ermittelt wird. Abhängig vom Evaluationswert wird wenigstens ein für den Fahrer verfügbares Leistungsmerkmal und/oder wenigstens eine Fahrfunktion eines Systems des Kraftfahrzeugs aktiviert oder deaktiviert.

DE 20 2013 008 112 U1 offenbart ein Fahrerassistenzsystem für ein Kraftfahrzeug zum Ausgeben von Abbiegehinweisen für Abbiegevorgänge des Kraftfahrzeugs. Hierbei wird ein das momentane Fahrverhalten eines Fahrers des Kraftfahrzeugs kennzeichnender Parameter ermittelt, der ermittelte Parameter klassifiziert, ermittelt, ob ein Abbiegevorgang des Kraftfahrzeugs von einer momentan von dem Kraftfahrzeug befahrenen ersten Fahrbahn auf eine die erste Fahrbahn querende zweite Fahrbahn bevorsteht, und ein Mindestabstandswert des Kraftfahrzeugs zu einem auf der zweiten Fahrbahn befindlichen Verkehrsteilnehmer ermittelt. Basierend auf dem ermittelten Mindestabstandswert wird ein Abbiegehinweis ausgegeben.

Vor diesem Hintergrund besteht eine Aufgabe der vorliegenden Erfindung darin, auf einfache und kostengünstige Weise ein Kraftfahrzeug bei einer bestehenden Kollisionsgefahr in Abhängigkeit des Fahrverhaltens des Fahrers zu bremsen.

Demgemäß wird eine Vorrichtung zum Aktivieren/Deaktivieren eines Sicherheitssystems eines Kraftfahrzeugs bei einem Abbiegevorgang des Kraftfahrzeugs vorgeschlagen. Das Sicherheitssystem ist dazu eingerichtet, einen Bremsvorgang des Kraftfahrzeugs bei dem Abbiegevorgang einzuleiten, wenn eine Kollisionswahrscheinlichkeit des Kraftfahrzeugs mit einem Gegenverkehr gleich oder größer als ein festgesetzter Grenzwert ist.

Um die Autonomie des Fahrers nicht einzuschränken, wird gemäß der vorgeschlagenen Erfindung das aktuelle Fahrverhalten des Fahrers berücksichtigt. Hierzu ist eine Erfassungseinheit vorgesehen, die das aktuelle Fahrverhalten des Fahrers des Kraftfahrzeugs erfasst. Eine Bestimmungseinheit bestimmt anschließend, ob das aktuelle Fahrverhalten einem vordefinierten sportlichen Fahrverhalten entspricht. Wenn dies der Fall ist, deaktiviert eine Steuereinheit das Sicherheitssystem vor dem Einleiten des Bremsvorgangs.

Auf diese Weise kann ein Abbruchwunsch, d.h. der Wunsch des Fahrers, den Eingriff des Sicherheitssystems einschließlich Bremsung abzubrechen und somit darüber zu steuern, bereits vor dem tatsächlichen Eingriff durch das Sicherheitssystem beim Abbiegen erkannt und das Sicherheitssystem entsprechend deaktiviert werden. Die Autonomie des Fahrers wird somit nicht eingeschränkt.

Da ein momentan sportlich und schnell fahrend wollender Fahrer häufig aufmerksam ist und zu einer guten Klassifizierung und Einschätzung bestimmter Verkehrssituationen in der Lage ist, kann die Anzahl der ungewollten Falschauslösungen des Sicherheitssystems beim Abbiegen reduziert werden, da bei einem solchen Fahrverhalten das Sicherheitssystem deaktiviert wird. Des Weiteren wird die Zufriedenheit des Fahrers erhöht, da bewusst von ihm angeforderte sportliche Fahrmanöver nicht durch Assistenzsysteme unterbunden werden.

Des Weiteren wird die Sicherheit erhöht, da weniger, vom Fahrer ungewollte Bremseingriffe stattfinden und somit Irritationssituationen mit unüberlegtem Handeln als Folge vermieden werden können. Die Sicherheit wird auch dadurch erhöht, dass nicht zunächst das Kraftfahrzeug abgebremst wird, es also zu einer Verzögerung kommt und anschließend bei einem erneuten Beschleunigen durch den Fahrer es dennoch zu einer Kollision kommt, die ohne die Verzögerung, d.h. den Eingriff durch das Sicherheitssystem, nicht stattgefunden hätte.

Das Sicherheitssystem kann beispielsweise mittels einer Kamera den Gegenverkehr erfassen, wenn das Kraftfahrzeug einen Abbiegevorgang einleitet. Dieser kann beispielsweise anhand einer Lenkradstellung erkannt werden. Der Abbiegevorgang bezieht sich dabei insbesondere auf das Abbiegen an einer Kreuzung über eine Gegenspur, d.h. bei Rechtsverkehr ein Linksabbiegen, bei Linksverkehr ein Rechtsabbiegen.

Anschließend kann das Sicherheitssystem basierend auf dem erfassten Gegenverkehr sowie Eigenschaften des Kraftfahrzeugs, wie beispielsweise die Geschwindigkeit, eine Kollisionsgefahr bestimmen. Hierbei kann beispielsweise über die Kameraaufnahme des Gegenverkehrs, die aus mehreren Einzelbildern bestehen kann, eine Größe und Position des entgegenkommenden Kraftfahrzeugs bestimmt werden. Basierend auf der Größe und Position kann dann die Geschwindigkeit und Beschleunigung des Gegenverkehrs berechnet werden.

Nach Bestimmen der Kollisionswahrscheinlichkeit bestimmt das Sicherheitssystem, ob die berechnete Kollisionswahrscheinlichkeit gleich oder größer als ein festgesetzter Grenzwert ist. Wenn dies der Fall ist, leitet das Sicherheitssystem einen Bremsvorgang des Kraftfahrzeugs ein, sofern dieser nicht durch die Vorrichtung, wie oben beschrieben, unterbunden wird.

Die jeweilige Einheit, zum Beispiel Erfassungseinheit oder Steuereinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Gemäß einer Ausführungsform ist die Steuereinheit dazu eingerichtet, das Sicherheitssystem nach Beendigung des Abbiegevorgangs des Kraftfahrzeugs zu reaktivieren. Sobald der Abbiegevorgang abgeschlossen ist, kann somit das Sicherheitssystem wieder aktiv bei weiteren Abbiegevorgängen in die Steuerung bzw. Bremsung des Kraftfahrzeugs eingreifen.

Gemäß einer weiteren Ausführungsform ist die Erfassungseinheit dazu eingerichtet, zumindest einen Parameter des Kraftfahrzeugs zu erfassen. Die Erfassungseinheit kann beispielsweise Eigenschaften des Kraftfahrzeugs selbst und/oder Signale, die das aktuelle Fahrverhalten angeben, auslesen und auswerten.

Die Parameter können beispielsweise ein durch den Fahrer angefordertes Wunschmoment und die Fahrzeugmasse umfassen. Durch diese beiden Parameter ist es möglich, das aktuelle Fahrverhalten zu bestimmen und einen sportlichen Anfahrwunsch zu erkennen, ohne dass weitere Informationen über das Kraftfahrzeug benötigt werden. Alternativ könnte auch der Fahrpedalwinkel als Information verwendet werden, dieser ist jedoch abhängig vom Kraftfahrzeug und daher werden hierzu weitere Informationen über das spezielle Kraftfahrzeug benötigt. Wird der Wunschmoment verwendet, ist dieses unabhängig von spezifischen Eigenschaften des Kraftfahrzeugs, wodurch die Vorrichtung einfach in verschiedenen Kraftfahrzeugen eingesetzt werden kann.

Gemäß einer weiteren Ausführungsform ist die Bestimmungseinheit dazu eingerichtet, das aktuelle Fahrverhalten basierend auf einer logischen Verknüpfung des angeforderten Wunschmoments und der Fahrzeugmasse zu bestimmen. Beispielsweise kann das aktuelle Fahrverhalten dem vordefinierten sportlichen Fahrverhalten entsprechen, wenn das Verhältnis von angefordertem Wunschmoment zu Fahrzeugmasse gleich oder größer einem vordefinierten Wert ist. Dieser Wert kann in Abhängigkeit von einer Benutzereingabe festgesetzt werden.

Zusätzlich oder alternativ zu dem angeforderten Wunschmoment und der Fahrzeugmasse können die Parameter eine aktuelle Beschleunigung des Kraftfahrzeugs, einen Fahrpedalwinkel und/oder einen Lenkwinkel umfassen.

Gemäß einer weiteren Ausführungsform ist die Bestimmungseinheit dazu eingerichtet, das aktuelle Fahrverhalten basierend auf einer logischen Verknüpfung des angeforderten Wunschmoments und der Fahrzeugmasse und zumindest einem von der aktuellen Beschleunigung des Kraftfahrzeugs, dem Fahrpedalwinkel und/oder dem Lenkwinkel zu bestimmen. Durch diese weiteren Parameter kann die Bestimmung des Fahrverhaltens verbessert werden.

Gemäß einem weiteren Aspekt wird ein Kraftfahrzeug mit einer wie oben beschriebenen Vorrichtung zum Aktivieren/Deaktivieren eines Sicherheitssystems des Kraftfahrzeugs bei einem Abbiegevorgang des Kraftfahrzeugs vorgeschlagen. Das Kraftfahrzeug kann insbesondere ein Personenkraftwagen sein.

Gemäß einem weiteren Aspekt wird ein Verfahren zum Aktivieren/Deaktivieren eines Sicherheitssystems eines Kraftfahrzeugs bei einem Abbiegevorgang des Kraftfahrzeugs vorgeschlagen, wobei das Sicherheitssystem dazu eingerichtet ist, einen Bremsvorgang des Kraftfahrzeugs bei dem Abbiegevorgang einzuleiten, wenn eine Kollisionswahrscheinlichkeit des Kraftfahrzeugs mit einem Gegenverkehr gleich oder größer als ein festgesetzter Grenzwert ist. Das Verfahren weist die folgenden Schritte auf: Erfassen eines aktuellen Fahrverhaltens eines Fahrers des Kraftfahrzeugs, Bestimmen, ob das aktuelle Fahrverhalten einem vordefinierten sportlichen Fahrverhalten entspricht, und Deaktivieren des Sicherheitssystems vor dem Einleiten des Bremsvorgangs, wenn das aktuelle Fahrverhalten einem vordefinierten sportlichen Fahrverhalten entspricht.

Die für die vorgeschlagene Vorrichtung beschriebenen Ausführungsformen und Merkmale gelten für das vorgeschlagene Verfahren entsprechend.

Weiterhin wird ein Computerprogrammprodukt vorgeschlagen, welches einen Programmcode aufweist, der dazu ausgebildet ist, auf einem Computer die Durchführung des wie oben erläuterten Verfahrens zu veranlassen.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Fig. 1 zeigt eine schematische Ansicht einer Kreuzung mit einem Kraftfahrzeug sowie vorhandenem Gegenverkehr;

Fig. 2 zeigt ein schematisches Blockdiagramm des Kraftfahrzeugs mit einer Vorrichtung zum Aktivieren/Deaktivieren eines Sicherheitssystems des Kraftfahrzeugs bei einem Abbiegevorgang des Kraftfahrzeugs; und

Fig. 3 zeigt ein schematisches Ablaufdiagramm eines Verfahrens zum Aktivieren/Deaktivieren eines Sicherheitssystems eines Kraftfahrzeugs bei einem Abbiegevorgang des Kraftfahrzeugs.

In den Figuren sind gleiche oder funktionsgleiche Elemente mit denselben Bezugszeichen versehen worden, sofern nichts anderes angegeben ist.

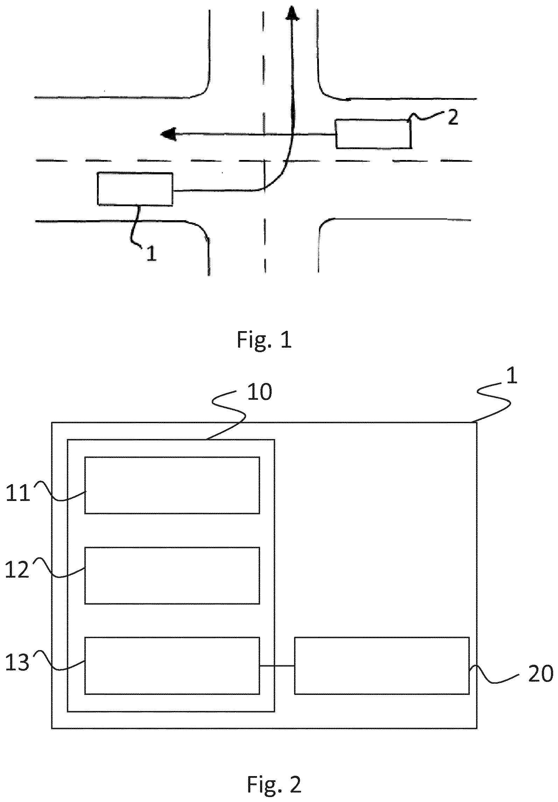

Fig. 1 zeigt eine Kreuzung mit einem Kraftfahrzeug 1 und einem zweiten Kraftfahrzeug 2, welches einen Gegenverkehr zu dem ersten Kraftfahrzeug 1 darstellt. Bei einem Abbiegevorgang des Kraftfahrzeugs 1 nach links, d.h. über die Spur des zweiten Kraftfahrzeugs 2, kann es, je nach Geschwindigkeit/Beschleunigung der beiden Kraftfahrzeuge 1, 2 zu einer Kollision kommen.

Um eine solche Kollision zu verhindern, ist in dem Kraftfahrzeug 1 ein Sicherheitssystem 20 zum Verhindern einer Kollision vorgesehen. Je nach aktuellem Fahrverhalten des Fahrers kann es jedoch gewünscht sein, dass das Sicherheitssystem 20 bei einer Kollisionsgefahr keinen automatisierten Bremsvorgang einleitet. Dies ist beispielsweise der Fall, wenn der Fahrer sehr schnell oder sportlich fährt. In einem solchen Fall könnte der Fahrer durch Abbruch einen bereits durch das Sicherheitssystem 20 initiierten Bremsvorgang wieder aufheben. Da dies jedoch zu einer ungewünschten Verzögerung beim Abbiegevorgang führt, ist in dem Kraftfahrzeug 1 eine Vorrichtung 10 zum Aktivieren/Deaktivieren des Sicherheitssystems 20 vorgesehen, um das Sicherheitssystem 20 in Abhängigkeit von einem aktuellen Fahrverhalten des Fahrers deaktivieren zu können.

Bei dem in Fig. 1 gezeigten Beispiel wird Rechtsverkehr angenommen. Die im Folgenden beschriebene Vorrichtung 10 zum Aktivieren/Deaktivieren des Sicherheitssystems 20 und das Sicherheitssystem 20 können jedoch ebenfalls bei Linksverkehr eingesetzt werden.

Die Vorrichtung 10 weist eine Erfassungseinheit 11, eine Bestimmungseinheit 12 sowie eine Steuereinheit 13 auf.

Bevor das Sicherheitssystem 20 im Falle einer Kollisionsgefahr mit dem Gegenverkehr 2 einen Bremsvorgang einleitet, erfasst die Erfassungseinheit 11 das aktuelle Fahrverhalten des Fahrers des Kraftfahrzeugs 1. Hierzu kann die Erfassungseinheit 11 das durch den Fahrer angeforderte Wunschmoment sowie die Fahrzeugmasse logisch verknüpfen.

Die Bestimmungseinheit 12 kann anschließend bestimmen, ob das aktuelle Fahrverhalten einem vordefinierten sportlichen Fahrverhalten entspricht. Wenn das Ergebnis der logischen Verknüpfung gleich oder größer einem vordefinierten Wert ist, wird das aktuelle Fahrverhalten als sportliches Fahrverhalten erkannt.

Wenn das aktuelle Fahrverhalten dem vordefinierten sportlichen Fahrverhalten entspricht, deaktiviert die Steuereinheit 13 das Sicherheitssystem 20 vor dem Einleiten des Bremsvorgangs. Nach Abschluss des Abbiegevorgangs aktiviert die Steuereinheit 13 das Sicherheitssystem 20 wieder, so dass dieses für zukünftige Abbiegevorgänge wieder zur Verfügung steht. Bei jedem weiteren Abbiegevorgang wird das aktuelle Fahrverhalten erneut daraufhin überprüft, ob ein sportliches Fahrverhalten vorliegt und nur wenn dies der Fall ist, wird das Sicherheitssystem 20 erneut deaktiviert.

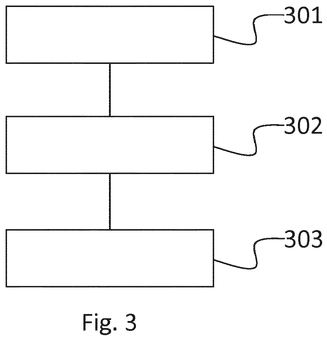

Fig. 3 zeigt ein Verfahren zum Aktivieren/Deaktivieren des Sicherheitssystems 20 des Kraftfahrzeugs 1 bei einem Abbiegevorgang des Kraftfahrzeugs 1. Das Verfahren weist die folgenden Schritte auf:
In einem ersten Schritt 301 wird ein aktuelles Fahrverhalten eines Fahrers des Kraftfahrzeugs 1 erfasst.

In einem zweiten Schritt 302 wird dann bestimmt, ob das aktuelle Fahrverhalten einem vordefinierten sportlichen Fahrverhalten entspricht.

Sofern dies der Fall ist, wird anschließend in einem dritten Schritt 303 das Sicherheitssystem 20 vor dem Einleiten des Bremsvorgangs deaktiviert.

Durch die vorgeschlagene Vorrichtung ist es möglich, ein Sicherheitssystem, welches eine Kollision mit Gegenverkehr automatisiert verhindern soll, in Abhängigkeit von einem aktuellen Fahrverhalten des Fahrers anzupassen, d.h. zu aktivieren oder zu deaktivieren. Auf diese Weise kann die Autonomie des Fahrers erhöht werden, während gleichzeitig die Sicherheit im Straßenverkehr verbessert wird.

### Bezugszeichen

- 1: Kraftfahrzeug
- 2: Gegenverkehr
- 10: Vorrichtung
- 11: Erfassungseinheit
- 12: Bestimmungseinheit
- 13: Steuereinheit
- 20: Sicherheitssystem
- 301-303: Verfahrensschritte

## Patentansprüche

1. Vorrichtung (10) zum Aktivieren/Deaktivieren eines Sicherheitssystems (20) eines Kraftfahrzeugs (1) bei einem Abbiegevorgang des Kraftfahrzeugs (1), wobei das Sicherheitssystem (20) dazu eingerichtet ist, einen Bremsvorgang des Kraftfahrzeugs (1) bei dem Abbiegevorgang einzuleiten, wenn eine Kollisionswahrscheinlichkeit des Kraftfahrzeugs (1) mit einem Gegenverkehr (2) gleich oder größer als ein festgesetzter Grenzwert ist, mit
einer Erfassungseinheit (11) zum Erfassen eines aktuellen Fahrverhaltens eines Fahrers des Kraftfahrzeugs (1), und
einer Bestimmungseinheit (12) zum Bestimmen, ob das aktuelle Fahrverhalten einem vordefinierten sportlichen Fahrverhalten entspricht,
**dadurch gekennzeichnet, dass** die Vorrichtung (10) eine Steuereinheit (13) zum Deaktivieren des Sicherheitssystems (20) vor dem Einleiten des Bremsvorgangs aufweist, wenn das aktuelle Fahrverhalten einem vordefinierten sportlichen Fahrverhalten entspricht.

2. Vorrichtung (10) nach Anspruch 1, **dadurch gekennzeichnet, dass** die Steuereinheit (13) dazu eingerichtet ist, das Sicherheitssystem (20) nach Beendigung des Abbiegevorgangs des Kraftfahrzeugs (1) zu reaktivieren.

3. Vorrichtung (10) nach Anspruch 1 oder 2, **dadurch gekennzeichnet, dass** die Erfassungseinheit (11) dazu eingerichtet ist, zumindest einen Parameter des Kraftfahrzeugs (1) zu erfassen.

4. Vorrichtung (10) nach Anspruch 3, **dadurch gekennzeichnet, dass** der zumindest eine Parameter ein durch den Fahrer angefordertes Wunschmoment und die Fahrzeugmasse umfasst.

5. Vorrichtung (10) nach Anspruch 4, **dadurch gekennzeichnet, dass** die Bestimmungseinheit (12) dazu eingerichtet ist, das aktuelle Fahrverhalten basierend auf einer logischen Verknüpfung des angeforderten Wunschmoments und der Fahrzeugmasse zu bestimmen.

6. Vorrichtung (10) nach Anspruch 5, **dadurch gekennzeichnet, dass** das aktuelle Fahrverhalten dem vordefinierten sportlichen Fahrverhalten entspricht, wenn das Verhältnis von angefordertem Wunschmoment zu Fahrzeugmasse gleich oder größer einem vordefinierten Wert ist.

7. Vorrichtung (10) nach einem der Ansprüche 3 bis 6, **dadurch gekennzeichnet, dass** der zumindest eine Parameter eine aktuelle Beschleunigung des Kraftfahrzeugs (1), einen Fahrpedalwinkel und/oder einen Lenkwinkel umfasst.

8. Vorrichtung (10) nach Anspruch 7, **dadurch gekennzeichnet, dass** die Bestimmungseinheit (12) dazu eingerichtet ist, das aktuelle Fahrverhalten basierend auf einer logischen Verknüpfung von zumindest zwei der Parameter zu bestimmen.

9. Kraftfahrzeug (1), insbesondere Personenkraftwagen, mit
einer Vorrichtung (10) nach einem der Ansprüche 1 bis 8 zum Deaktivieren eines Sicherheitssystems (20) des Kraftfahrzeugs (1) bei einem Abbiegevorgang des Kraftfahrzeugs (1).

10. Verfahren zum Aktivieren/Deaktivieren eines Sicherheitssystems (20) eines Kraftfahrzeugs (1) bei einem Abbiegevorgang des Kraftfahrzeugs (1), wobei das Sicherheitssystem (20) dazu eingerichtet ist, einen Bremsvorgang des Kraftfahrzeugs (1) bei dem Abbiegevorgang einzuleiten, wenn eine Kollisionswahrscheinlichkeit des Kraftfahrzeugs (1) mit einem Gegenverkehr (2) gleich oder größer als ein festgesetzter Grenzwert ist, mit
Erfassen (301) eines aktuellen Fahrverhaltens eines Fahrers des Kraftfahrzeugs (1), und
Bestimmen (302), ob das aktuelle Fahrverhalten einem vordefinierten sportlichen Fahrverhalten entspricht,
**dadurch gekennzeichnet, dass** das Verfahren ein Deaktivieren (303) des Sicherheitssystems (20) vor dem Einleiten des Bremsvorgangs aufweist, wenn das aktuelle Fahrverhalten einem vordefinierten sportlichen Fahrverhalten entspricht.

## Claims

1. Apparatus (10) for activating/deactivating a safety system (20) of a motor vehicle (1) in the event of a turning manoeuvre of the motor vehicle (1), wherein the safety system (20) is configured to initiate a braking process of the motor vehicle (1) in the event of the turning manoeuvre if a collision likelihood for the motor vehicle (1) and oncoming traffic (2) is equal to or greater than a stipulated limit value, having
a detection unit (11) for detecting a current driving behaviour of a driver of the motor vehicle (1), and
a determination unit (12) for determining whether the current driving behaviour is consistent with a predefined sporty driving behaviour,
**characterized in that** the apparatus (10) has a control unit (13) for deactivating the safety system (20) before the braking process is initiated if the current driving behaviour is consistent with a predefined sporty driving behaviour.

2. Apparatus (10) according to Claim 1, **characterized in that** the control unit (13) is configured to reactivate the safety system (20) after completion of the turning manoeuvre of the motor vehicle (1).

3. Apparatus (10) according to Claim 1 or 2, **characterized in that** the detection unit (11) is configured to detect at least one parameter of the motor vehicle (1).

4. Apparatus (10) according to Claim 3, **characterized in that** the at least one parameter comprises a demanded torque requested by the driver and the vehicle mass.

5. Apparatus (10) according to Claim 4, **characterized in that** the determination unit (12) is configured to determine the current driving behaviour on the basis of a logic combination of the demanded torque requested and the vehicle mass.

6. Apparatus (10) according to Claim 5, **characterized in that** the current driving behaviour is consistent with the predefined sporty driving behaviour if the ratio of demanded torque requested to vehicle mass is equal to or greater than a predefined value.

7. Apparatus (10) according to one of Claims 3 to 6, **characterized in that** the at least one parameter comprises a current acceleration of the motor vehicle (1), an accelerator pedal angle and/or a steering angle.

8. Apparatus (10) according to Claim 7, **characterized in that** the determination unit (12) is configured to determine the current driving behaviour on the basis of a logic combination of at least two of the parameters.

9. Motor vehicle (1), in particular a passenger vehicle, having
an apparatus (10) according to one of Claims 1 to 8 for deactivating a safety system (20) of the motor vehicle (1) in the event of a turning manoeuvre of the motor vehicle (1).

10. Method for activating/deactivating a safety system (20) of a motor vehicle (1) in the event of a turning manoeuvre of the motor vehicle (1), wherein the safety system (20) is configured to initiate a braking process of the motor vehicle (1) in the event of the turning manoeuvre if a collision likelihood for the motor vehicle (1) and oncoming traffic (2) is equal to or greater than a stipulated limit value, involving
detecting (301) a current driving behaviour of a driver of the motor vehicle (1), and
determining (302) whether the current driving behaviour is consistent with a predefined sporty driving behaviour,
**characterized in that** the method comprises deactivating (303) the safety system (20) before the braking process is initiated if the current driving behaviour is consistent with a predefined sporty driving behaviour.

## Revendications

1. Dispositif (10) d'activation/de désactivation d'un système de sécurité (20) d'un véhicule automobile (1) lorsque le véhicule automobile (1) effectue un virage, le système de sécurité (20) étant conçu pour lancer un processus de freinage du véhicule automobile (1) pendant le processus de virage si la probabilité de collision du véhicule automobile (1) avec un trafic en sens inverse (2) est supérieure ou égale à une valeur limite spécifiée, ledit dispositif comprenant
une unité de détection (11) destinée à détecter un comportement de conduite actuel d'un conducteur du véhicule automobile (1), et
une unité de détermination (12) destinée à déterminer si le comportement de conduite actuel correspond à un comportement de conduite sportif prédéfini,
**caractérisé en ce que** le dispositif (10) comporte une unité de commande (13) destinée à désactiver le système de sécurité (20) avant de lancer le processus de freinage si le comportement de conduite actuel correspond à un comportement de conduite sportif prédéfini.

2. Dispositif (10) selon la revendication 1, **caractérisé en ce que** l'unité de commande (13) est conçue pour réactiver le système de sécurité (20) après que le véhicule automobile (1) a terminé son virage.

3. Dispositif (10) selon la revendication 1 ou 2, **caractérisé en ce que** l'unité de détection (11) est conçue pour détecter au moins un paramètre du véhicule automobile (1).

4. Dispositif (10) selon la revendication 3, **caractérisé en ce que** l'au moins un paramètre comprend un couple souhaité demandé par le conducteur et la masse du véhicule.

5. Dispositif (10) selon la revendication 4, **caractérisé en ce que** l'unité de détermination (12) est conçue pour déterminer le comportement de conduite actuel sur la base d'une combinaison logique du couple souhaité demandé et de la masse du véhicule.

6. Dispositif (10) selon la revendication 5, **caractérisé en ce que** le comportement de conduite actuel correspond au comportement de conduite sportif prédéfini lorsque le rapport du couple souhaité demandé à la masse du véhicule est supérieur ou égal à une valeur prédéfinie.

7. Dispositif (10) selon l'une des revendications 3 à 6, **caractérisé en ce que** l'au moins un paramètre comprend une accélération actuelle du véhicule automobile (1), un angle de pédale d'accélérateur et/ou un angle de braquage.

8. Dispositif (10) selon la revendication 7, **caractérisé en ce que** l'unité de détermination (12) est conçue pour déterminer le comportement de conduite actuel sur la base d'une combinaison logique d'au moins deux des paramètres.

9. Véhicule automobile (1), notamment voiture particulière, comprenant
un dispositif (10) selon l'une des revendications 1 à 8 destiné à désactiver un système de sécurité (20) du véhicule automobile (1) lorsque le véhicule automobile (1) effectue un virage.

10. Procédé d'activation/de désactivation d'un système de sécurité (20) d'un véhicule automobile (1) lorsque le véhicule automobile (1) effectue un virage, le système de sécurité (20) étant conçu pour lancer un processus de freinage du véhicule automobile (1) pendant le processus de virage si la probabilité de collision du véhicule automobile (1) avec un trafic en sens inverse (2) est supérieure ou égale à une valeur limite spécifiée, ledit procédé comprenant les étapes suivantes
détecter (301) un comportement de conduite actuel d'un conducteur du véhicule automobile (1), et
déterminer (302) si le comportement de conduite actuel correspond à un comportement de conduite sportif prédéfini,
**caractérisé en ce que** le procédé comprend une désactivation (303) du système de sécurité (20) avant de lancer le processus de freinage si le comportement de conduite actuel correspond à un comportement de conduite sportive prédéfini.
